# FASCICULE DE BREVET EUROPEEN

(11) **EP 3 118 824 B1**
(45) Date de publication et mention de la délivrance du brevet: **21.11.2018**
(21) Numéro de dépôt: 15177298.5
(22) Date de dépôt: 17.07.2015
(51) Int. Cl.: G08B 13/06, B65D 55/02, G06Q 10/08, G08B 25/10

(54) **SYSTÈME POUR LE SUIVI DES CONDITIONS DE TRANSPORT DE MARCHANDISES**
SYSTEM ZUR NACHVERFOLGUNG DER TRANSPORTBEDINGUNGEN VON WAREN
SYSTEM FOR MONITORING FREIGHT CONDITIONS

(43) Date de publication de la demande: 18.01.2017
(73) Titulaire: S4GV SA, 1442 Montagny-Yverdon (CH)
(72) Inventeur: Ruggiero Ruggieri, Pietro, 1279 Bogis-Bossey (CH)
(74) Mandataire: Bugnion Genève

(56) Documents cités:
- WO-A1-2011/008884
- US-A- 5 656 996
- US-A1- 2005 073 406
- US-A1- 2006 181 413

## Description

### DOMAINE TECHNIQUE DE L'INVENTION

L'invention se rapporte aux domaines des systèmes informatisés pour le suivi des marchandises durant leur transport. L'invention porte en particulier sur un système pour le suivi de marchandises comprenant un serveur central. L'invention porte en outre sur un procédé de suivi de marchandises mis en oeuvre au moyen d'un tel système.

### ETAT DE L'ART ANTÉRIEUR

Toutes sortes de systèmes informatisés facilitant le suivi de marchandises durant le transport de celles-ci sont de nos jours utilisés. De tels systèmes s'appuient généralement sur un serveur central qui communique avec des appareils de lecture disséminés le long d'une chaine de transport et au moyen desquels des informations d'identification apposés sur les marchandises, généralement sous forme de codes-barres ou de codes QR, sont périodiquement scannées. De tels systèmes se limitent généralement à localiser les marchandises en différents lieux afin de déterminer le cheminement des marchandises le long de la chaîne de transport.

Cependant, bien que ces systèmes permettent de renseigner de manière partielle la localisation des marchandises en différents lieux de la chaine de transport, ils ne permettent pas d'établir précisément les contraintes auxquelles sont soumises les marchandises durant leur transport. En d'autres termes, ces systèmes ne permettent pas de déterminer avec certitude les conditions dans lesquelles sont transportées les marchandises. Cet inconvénient peut être particulièrement problématique lorsque les marchandises transportées sont des denrées périssables mais aussi lorsqu'il s'avère nécessaire, pour des raisons légales par exemple, d'être à même de déterminer précisément dans quelles conditions les marchandises ont été transportées, et ce pas seulement en différent lieux du trajet de transport mais tout au long de celui-ci.

De plus, les systèmes pour le suivi de marchandises actuels ne permettent pas de sécuriser efficacement les marchandises tout au long du transport, en particulier contre le vol de marchandises. En effet, lorsque les marchandises sont par exemple transportées par voie maritime, terrestre ou aérienne, les techniques de sécurisation reposent généralement sur des scellés qui sont apposés sur les containers de transport.

Or, l'utilisation de ces scellés aux fins de sécurisation, en particulier pour la détection de tentatives éventuelles d'intrusion au sein des containers de transport, se borne généralement à une analyse visuelle conduite par un personnel habilité qui contrôle en différents lieux de la chaine de transport l'intégrité des scellés. Cette manière de procéder implique que les systèmes pour le suivi de marchandises actuels, qui reposent sur l'utilisation de tels moyens de sécurisation, n'assurent pas efficacement la sécurisation des marchandises tout au long du trajet de transport et, en particulier, qu'ils ne permettent pas de détecter rapidement les tentatives d'intrusion visant à entrer en contact avec les marchandises transportés dans des containers de transport. Un exemple de scellé électronique pour container, relié à des capteurs de mesure et à un serveur distant est divulgué dans le document WO2011/008884.

### EXPOSÉ DE L'INVENTION

Un but de l'invention est de palier à ces inconvénients, plus précisément de fournir un système pour le suivi de marchandises qui permet d'établir précisément les conditions de transport durant le transport des marchandises.

Un autre but de l'invention est de fournir un système de suivi de marchandises qui permet de déterminer les conditions de transport pas seulement en différents points du trajet de transport mais tout au long du trajet de celui-ci.

Un autre but de l'invention est de fournir un système pour le suivi de marchandises qui améliore la sécurisation contre le vol de marchandises, en particulier lorsque les marchandises sont transportées dans des containers par voie maritime, terrestre ou aérienne.

Un autre but de l'invention est de fournir un système de suivi de marchandises qui, dans le contexte de marchandises transportées dans des containers par voie maritime ou aérienne, améliore la rapidité avec laquelle sont détectées les ouvertures des containers de transport.

Un autre but de l'invention est de fournir un système de suivi de marchandises qui permet de varier les paramètres d'observation des conditions de transport.

Ces buts sont atteints par un système pour le suivi de marchandises comprenant au moins un serveur, tel que défini par la revendication 1. Un tel système est du type comprenant au moins une serrure communicante et au moins un capteur de mesure, la serrure communicante comprenant des moyens de contrôle et des premiers moyens de communication, les premiers moyens de communication étant configurés pour émettre et recevoir des signaux radiofréquences, le capteur de mesure comprenant un processeur, des moyens de mesure pour la mesure d'au moins un paramètre physique, une mémoire et des seconds moyens de communication, la mémoire étant apte, sur instruction du processeur, à stocker durablement au moins une valeur d'un paramètre physique mesuré au moyen des moyens de mesure, les seconds moyens de communication étant configurés pour émettre des signaux radiofréquences, les moyens de contrôle et/ou le processeur étant configurés pour déterminer si une valeur d'un paramètre physique mesuré au moyen des moyens de mesure (m) est en conformité avec un paramètre de consigne.

Selon une caractéristique, la serrure communicante peut comprendre une première et une seconde prise pour connecter les deux extrémités d'une fibre optique, les moyens de contrôle étant aptes, quand la première extrémité de la fibre est connectée à la première prise et la deuxième extrémité de la fibre est connectée à la seconde prise, à déterminer l'intégrité d'une fibre optique et le statut, connectée ou déconnectée, de la première et de la seconde prise.

Selon une autre caractéristique, les seconds moyens de communication peuvent être configurés pour la réception de signaux radiofréquences.

Selon une autre caractéristique, les moyens de mesure peuvent comprendre des moyens de mesure de la température ambiante.

Selon une autre caractéristique, les moyens de mesure peuvent comprendre des moyens de mesure de l'humidité ambiante.

Selon une autre caractéristique, les moyens de mesure peuvent comprendre des moyens de mesure de l'intensité lumineuse.

Selon une autre caractéristique, les moyens de mesure peuvent comprendre des moyens de mesure de la pression.

Selon une autre caractéristique, les moyens de mesure peuvent comprendre des moyens de détection de la présence d'un gaz.

Selon une autre caractéristique, la serrure communicante peut comprendre un module de géolocalisation.

Selon une autre caractéristique, la serrure communicante peut comprendre un module de détection de mouvement.

Selon une autre caractéristique, la serrure communicante peut comprendre des moyens d'alimentation confinés dans un caisson en un matériau limitant les risques de propagation d'un incendie résultant d'une défaillance des moyens d'alimentation à l'ensemble de la serrure communicante.

Selon une autre caractéristique, le matériau peut être l'aluminium ou un mélange de polycarbonate et d'acrylonitrile butadiène styrène.

Un autre aspect de l'aspect de l'invention porte sur un procédé de suivi de marchandises mis en oeuvre par un système de suivi de marchandises tel que décrit ci-dessus, le procédé comprenant les étapes suivantes :
- réception par le serveur d'une première information de localisation envoyée par la serrure communicante ;
- transmission par le serveur d'une instruction de travail à destination de la serrure communicante, l'instruction de travail indiquant une périodicité de mesure ;
- transmission par la serrure communicante de l'instruction de travail à destination du capteur de mesure ; et
- modification par le processeur du capteur de mesure de la périodicité des mesures effectuées au moyen des moyens de mesure du capteur de mesure sur la base de l'indication de travail.

Selon une caractéristique, le procédé peut comprendre les étapes suivantes :
- réception par le serveur d'une seconde information de localisation envoyée par la serrure communicante ;
- transmission par le serveur d'une instruction d'arrêt à destination de la serrure communicante ;
- transmission par la serrure communicante de l'instruction d'arrêt à destination du capteur de mesure ; et
- extinction des moyens de mesure du capteur de mesure.

### BRÈVE DESCRIPTION DES FIGURES

D'autres caractéristiques et avantages de l'invention ressortiront à la lecture de la description qui suit, en référence aux figures annexées qui illustrent :
- la figure 1, une vue schématique du système de suivi de marchandises selon l'invention ;
- la figure 2, une vue schématique d'une serrure communicante du système de suivi de marchandises selon l'invention ;
- la figure 3, une vue schématique d'un capteur de mesure du système de suivi de marchandises selon l'invention ; et
- la figure 4, une vue schématique d'un procédé de suivi selon l'invention.

### DESCRIPTION DÉTAILLÉE DE L'INVENTION

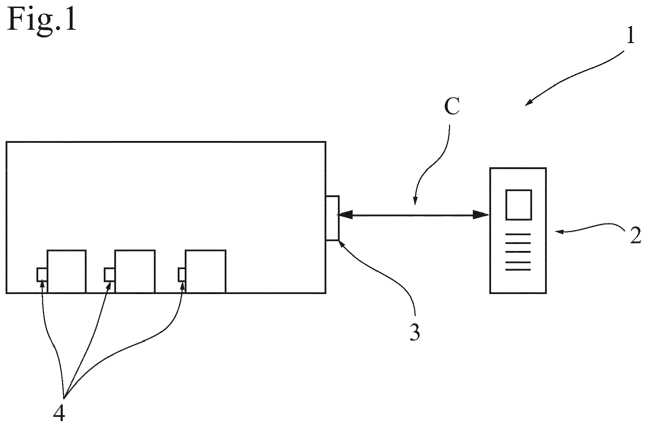

La figure 1 représente schématiquement un système pour le suivi de marchandises 1 selon l'invention. Le système comprend un serveur 2 avec lequel communique au moins une serrure communicante 3 via un canal de communication « C ». Compte tenu des moyens de communication dont est munie la serrure communicante 3, qui seront décrits plus en détail ci-dessous, le canal de communication « C » peut inclure un réseau pour le transfert de données, tel le réseau Internet, un réseau de communication mobile ou un réseau de communication incluant un ou plusieurs satellites de communication. Ainsi, le serveur 2 et la serrure communicante 3 sont aptes à échanger des données, en particulier sous forme de signaux radiofréquences.

Bien que, pour des raisons de clarté, la figure 1 ne représente qu'un seul serveur 2 et qu'une seule serrure communicante 3, le système pour le suivi de marchandises selon l'invention peut comprendre plusieurs serveurs et une pluralité de serrures communicantes 3. De même, le serveur 2 peut être remplacé par un ordinateur, un téléphone intelligent ou tout autre type de terminal informatique. Alternativement, le serveur 2 est lui-même connecté à un autre terminal informatique à travers un réseau informatique, que ce soit un réseau local (LAN) ou global (WAN), et ce via une liaison de communication qui peut être filaire ou sans fil.

Comme cela est représenté schématiquement sur la figure 1, la serrure communicante 3 est, de préférence, destinée à être apposée sur un container, qui apparait schématiquement sur la figure à gauche de la serrure communicante 3, par exemple contre les portes de celui-ci. Dans ce but, la serrure communicante 3 est pourvue de moyens de fixation, par exemple sous forme de vis, de liens ou d'aimants. Comme cela sera décrit ci-dessous, la serrure communicante 3 est avantageusement munie de moyens qui permettent la sécurisation des marchandises transportées dans le container.

Le système pour le suivi des marchandises selon l'invention comprend en outre au moins un capteur de mesure 4 destiné à être apposé au contact des marchandises, que ce soit directement sur les marchandises ou sur toute forme d'emballage ou de support généralement utilisé pour le transport de marchandises (cartons, palettes, boites, etc.). Comme cela décrit ci-dessous, le capteur de mesure 4 comprend des moyens de communication le rendant apte à communiquer de manière bidirectionnelle avec la serrure communicante 3, de préférence sous la forme de signaux radiofréquences.

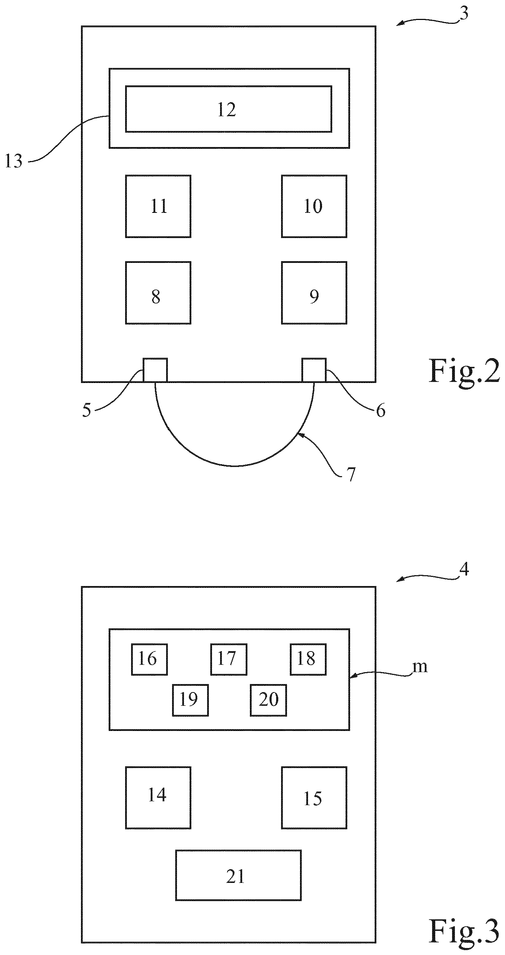

Sur la figure 2 sont représentés les composants qui constituent une serrure communicante 3 d'un système pour le suivi de marchandises selon l'invention.

La serrure communicante 3 comprend des moyens de contrôle 8, incluant au moins un processeur et une mémoire, et des moyens de communication 9 pour communiquer avec le serveur 2, via le canal de communication C, et avec le capteur de mesure 4. Les moyens de contrôle 8 sont liés avec les moyens de communication 9, de sorte que les moyens de contrôle 8 sont aptes à commander les moyens de communication 9 pour déclencher l'émission de signaux, de préférence des signaux radiofréquences, par les moyens de communication 9.

Les moyens de communication 9 sont bidirectionnels, c'est-à-dire qu'ils sont aptes à émettre et recevoir des signaux, de préférence des signaux radiofréquences. Ils peuvent en outre être configurés et adaptés pour utiliser des protocoles de communication en champ proche (NFC). Les moyens de communication 9 sont aptes à transférer des signaux reçus aux moyens de contrôle 8 afin que les moyens de contrôle 8 analysent les signaux reçus et, si nécessaire, effectuent des actions.

Les moyens de contrôle 8 sont configurés pour déterminer si les paramètres de mesure transmis par le capteur de mesure 4 sont en conformité avec un paramètre de consigne prédéfini. A cette fin, au moins un paramètre de consigne et/ou au moins un paramètre de tolérance sont enregistrés dans la mémoire des moyens de contrôle 8 en regard d'un ou plusieurs paramètres physiques mesurés par le capteur de mesure 4.

En fonction des paramètres de mesure reçus, les moyens de contrôle 8 commandent les moyens de communication 9 pour déclencher l'émission de signaux d'alarme à destination du serveur central 2. Les moyens de contrôle 8 peuvent déclencher l'émission de signaux d'alarme vis-à-vis de n'importe quel paramètre physique mesuré.

Alternativement, conformément aux caractéristiques du capteur de mesure 4 telles que décrites ci-dessous, les moyens de contrôle 8 commandent les moyens de communication 9 pour déclencher l'émission d'un signal d'alarme à destination du serveur 2 suite la réception d'un signal d'alarme envoyé par le capteur de mesure 4.

Avantageusement, la mesure de l'intensité lumineuse par les moyens de mesure du capteur 4, tel que cela décrit ci-dessous, permet de détecter rapidement, en temps quasi réel, une tentative d'accès à la marchandise. En effet, lors de l'accès à la marchandise, l'environnement lumineux est modifié, par exemple lors de l'ouverture d'une bâche d'une remorque ou d'une porte d'un container.

La serrure communicante comprend en outre un module de géolocalisation 10, par exemple un récepteur GPS, qui est lié au moyens de contrôle 8 de sorte que les moyens de contrôle 8 sont aptes à interagir avec le module de géolocalisation 10 pour déterminer la localisation de la serrure sur le globe terrestre. Aux fins de localisation de la serrure communicante 3, les moyens de contrôle 8 sont configurés pour commander les moyens de communication 9 pour émettre régulièrement des signaux de localisation contenant des données de localisation à destination du serveur 2.

La serrure communicante 3 comprend en outre des moyens de détection de mouvement 11, par exemple un accéléromètre, qui sont liés au moyen de contrôle 8 de sorte que les moyens de contrôle 8 sont aptes à interagir avec le module de détection de mouvement 11 pour déterminer tout mouvement de la serrure communicante 3. Aux fins de sécurisation et de suivi, les moyens de contrôle 8 sont configurés pour commander les moyens de communication 9 pour émettre régulièrement des signaux contenant des données reportant les mouvements détectés au niveau de la serrure communicante 3 à destination du serveur 2.

Enfin, la serrure communicante 3 comprend des moyens d'alimentation 12, par exemple une batterie au lithium, qui, de préférence, sont dimensionnés pour conférer une autonomie de fonctionnement supérieure à soixante jours à la serrure communicante 3, et ce en tenant compte d'une activation des moyens de communication 9, que ce soit pour émettre et/ou recevoir des signaux radiofréquences, au moins toutes les quinze minutes. Les moyens d'alimentation 12 sont de plus confinés dans un caisson 13 en un matériau choisi pour limiter la propagation à l'ensemble de la serrure communicante 3 d'un incendie résultant d'une défaillance des moyens d'alimentation. De préférence, ce matériau est l'aluminium ou un mélange de polycarbonate et d'acrylonitrile butadiène styrène.

De manière optionnelle, la serrure communicante 3 comprend une première prise 5 et une seconde prise 6 à chacune desquelles peut être branchée une extrémité d'une fibre optique 7. De préférence, la première prise 5 est apte à générer un flux lumineux. Alternativement ou cumulativement, la deuxième prise 6 est apte à générer un flux lumineux.

Dans ce cas, les moyens de contrôle 8 sont également configurés pour, quand les deux extrémités d'une fibre optique sont branchées dans les prises 5 et 6, déterminer l'intégrité de la fibre optique branchée. En détectant si le flux lumineux censé cheminer entre les prises 5, 6 est présent ou en mesurant les variations d'intensité de celui-ci, les moyens de contrôle 8 sont à même d'établir si la fibre optique branchée a été endommagée. Alternativement ou cumulativement, les moyens de contrôle 8 sont configurés pour détecter le statut de chacune des prises 5 et 6. En d'autres termes, les moyens de contrôle 8 sont configurés pour déterminer si chacune des prises 5 et 6 est connectée ou déconnectée, c'est-à-dire si l'extrémité d'une fibre optique est ou non branchée dans la prise.

Dans le cas où les extrémités d'une fibre optique sont branchées aux prises 5 et 6 et que les moyens de contrôle 8 détectent la rupture du flux lumineux entre les prises 5 et 6, les moyens de contrôle 8 sont configurés pour commander l'émission d'un signal radiofréquences par les moyens de communication 9, prenant par exemple la forme d'un signal d'alarme. De même, si les moyens de contrôle 8 détectent un changement de statut de l'une des prises 5,6, par exemple un passage du statut connectée au statut déconnectée, les moyens de contrôle 8 sont aptes à commander les moyens de communication 9 pour émettre un signal radiofréquences.

Ainsi, compte tenu de la fragilité d'une fibre optique, il devient difficile d'ouvrir les portes d'un container sur lequel est apposée la serrure communicante 3 munie d'une fibre optique positionnée judicieusement sans débrancher ou rompre la fibre optique et donc sans influer sur l'intensité du flux lumineux circulant entre les prises 5 et 6. Il est également difficile de réaliser un pontage sur une fibre optique. Or, puisque les moyens de contrôle 8 sont configurés pour commander l'émission d'un signal radiofréquences, de préférence à destination du serveur 2, en cas de détection de la rupture du flux lumineux, que ce soit à cause de l'endommagement de la fibre ou du changement de statut de l'une des prises, le serveur 2 est informé en temps quasi-réel lorsqu'un tel évènement survient.

Par conséquent, la serrure communicante 3, surtout lorsqu'elle est apposée sur la porte d'un container, augmente la sécurité contre les vols de marchandises en étant à même de détecter de diverses manières une intrusion au sein du container, soit en analysant les paramètres physiques mesurés par le capteur de mesure, par exemple une mesure de l'intensité lumineuse, soit en utilisant des moyens électromécaniques, reposant sur des moyens de détection de mouvement ou, de manière optionnelle, sur l'utilisation d'une fibre optique.

Pour ces raisons, en particulier compte tenu des caractéristiques de la serrure communicante 3, le système de suivi de marchandises selon l'invention améliore la rapidité avec laquelle peut être détectée une intrusion visant à entrer en contact avec la marchandise transportée ou, tout au long du trajet de transport, une altération des conditions de transport. De ce fait, le système de suivi de marchandises selon l'invention améliore de manière indirecte la protection contre le vol de marchandises et l'altération des marchandises.

Sur la figure 3 sont représentés les composants qui constituent un capteur de mesure 4 d'un système pour le suivi de marchandises selon l'invention.

Le capteur de mesure 4 comprend des moyens de mesure m, un processeur 14, des moyens de communication 15, aptes à communiquer avec les moyens de communication 9 de la serrure communicante 3 de manière bidirectionnelle, une mémoire 21 et des moyens d'alimentation, sous forme de pile ou de batterie (non représentés).

Les moyens de mesure m comprennent des moyens de mesure de la température ambiante 16, en d'autres termes un ou plusieurs thermomètres, des moyens de mesure de l'humidité ambiante 17, en d'autres termes un ou plusieurs hygromètres, des moyens de mesure de l'intensité lumineuse 18, incluant par exemple une ou plusieurs photodiodes, et des moyens de mesure de la pression 19. Alternativement ou cumulativement, les moyens de mesure m comprennent des moyens de détection de la présence d'un gaz, permettant par exemple de mesurer les taux de monoxyde de carbone ambiant ou d'un autre type de gaz. Les moyens de mesure m effectuent des mesures régulières des paramètres physiques énoncés ci-dessus sur commande du processeur 14.

Le processeur 14 est configuré pour interagir avec les moyens de mesure m afin de commander la prise de mesure régulière par les moyens de mesure m des paramètres physiques énoncés ci-dessous. De préférence, le processeur interagit avec la mémoire 21 pour en extraire un paramètre de périodicité qui y est enregistré afin de déterminer à quels moments commander les prises de mesure par les moyens de mesure m.

De plus, le processeur 14 est configuré pour commander les moyens de communication 15 de sorte que les mesures effectuées via les moyens de mesure m sont émis par le capteur de mesure 4 à destination de la serrure communicante 3 qui, dès réception, retransmet les mesures à destination du serveur 2.

En outre, le processeur 14 est configuré pour interagir avec la mémoire 21 de sorte qu'il commande l'enregistrement des mesures effectuées via les moyens de mesure m dans la mémoire 21. A cette fin, la mémoire 21 est apte à stocker de manière durable plusieurs paramètres de mesure relatifs aux mesures de paramètres physiques effectués par les moyens de mesure m.

Ainsi, dans le cas où le capteur de mesure 4 ne peut pas communiquer avec la serrure communicante 3, par exemple dans le cas où le canal de communication entre les moyens de communication 15 du capteur de mesure 4 et les moyens de communication 9 de la serrure communicante 3 est indisponible, le processeur 14 est configuré pour commander l'enregistrement des paramètres physiques mesurés dans la mémoire 21. Ensuite, soit les paramètres physiques mesurés peuvent être transmis à la serrure communicante 3 lorsque le canal de communication est de nouveau disponible soit les paramètres peuvent être lus directement de la mémoire 21 au moyen d'un lecteur, de préférence connecté par un canal de communication au serveur 2, en interagissant avec les moyens de communication 15 du capteur de mesure 4, par exemple au moyen d'un protocole de communication en champ proche (NFC). De préférence, le processeur 14 est apte à déterminer la disponibilité du canal de communication avec la serrure communicante 3. Dans le cas où le processeur 14 détecte que le canal de communication est indisponible, il commande automatiquement l'enregistrement des mesures dans la mémoire 21. Alternativement, si le canal de communication entre le capteur de mesure 4 et la serrure communicante 3 est disponible, le processeur commande l'enregistrement des mesures dans la mémoire 21.

De manière optionnelle, le processeur 14 est configuré pour déterminer si un paramètre mesuré dépasse un seuil prédéfini ou s'écarte significativement d'un paramètre de consigne. Dans ce cas, un paramètre de consigne modifiable et/ou un paramètre de tolérance sont enregistrés dans la mémoire 21 en regard d'au moins un paramètre physique mesuré par le capteur. Dans ce cas, le processeur 14 est également configuré pour commander l'émission de signaux par les moyens de communication 15, par exemple lorsque la valeur de la mesure d'un paramètre physique s'écarte significativement d'une valeur de consigne.

Les moyens de communication 15 sont aptes à émettre et recevoir des signaux radiofréquences, en particulier pour interagir avec les moyens de communication 9 de la serrure communicante 3. Lorsque la communication peut être établie, le capteur de mesure 4 transmet, via les moyens de communication 15, les paramètres mesurés à la serrure communicante 3 à des intervalles de temps déterminés en fonction du paramètre de périodicité enregistré dans la mémoire 21. La serrure communicante retransmet les données reçues au serveur 2. Le serveur 2 est donc informé régulièrement et/ou en temps réel des conditions de transport des marchandises. Par conséquent, le système pour le suivi de marchandises selon l'invention est continuellement à même de fournir des informations au sujet des conditions de transport des marchandises.

De plus, même si la communication entre le capteur de mesure 4 et la serrure communicante 3 est impossible, les paramètres physiques mesurés ne sont pas perdus mais disponibles dans la mémoire 21 où ils sont enregistrés.

Ces caractéristiques contribuent à permettre au système pour le suivi de marchandises selon l'invention d'être à même de déterminer les conditions de transport pas seulement en différents points prédéterminés du trajet de transport mais tout au long de la chaîne de transport. De plus, même dans le cas où, durant le trajet, le capteur de mesure 4 n'a pas pu transmettre une partie des paramètres physiques mesurés, il reste possible de connaître les conditions de transport tout au long du trajet. Dans le contexte du transport de denrées périssables, les caractéristiques du capteur de mesure 4 sont particulièrement avantageuses.

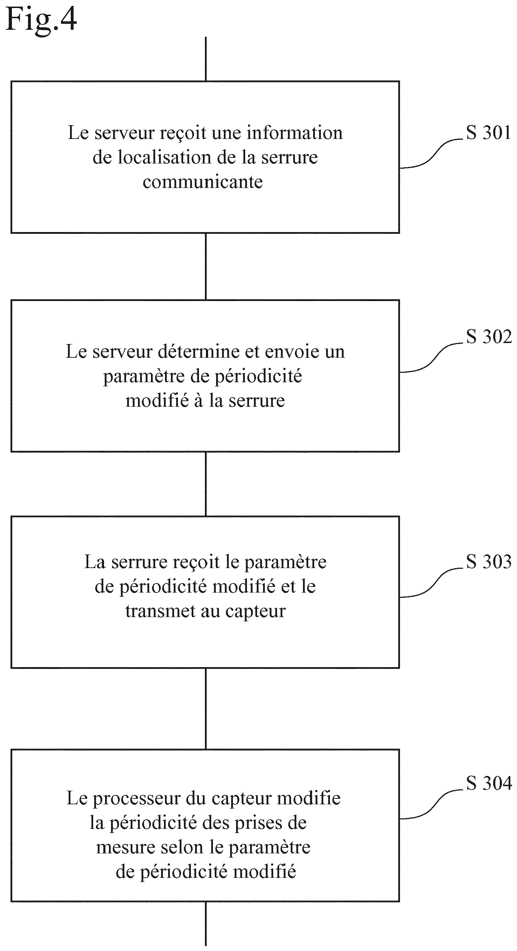

La figure 4 illustre un autre aspect de l'invention qui concerne un procédé de suivi mis en oeuvre avec le système pour le suivi de marchandises selon l'invention.

Comme cela a été décrit ci-dessus, le système pour le suivi de marchandises selon l'invention fonctionne principalement selon un mode de fonctionnement normal dans lequel le capteur de mesure 4 effectue régulièrement la mesure des paramètres physiques selon un paramètre de périodicité enregistré dans la mémoire 21. Cependant, le système pour le suivi de marchandises selon l'invention est également apte à fonctionner selon un mode de fonctionnement spécifique lors de la mise en oeuvre d'un procédé de suivi qui s'articule tel que décrit ci-dessous.

Le procédé de suivi selon l'invention comprend une première étape S301 durant laquelle le serveur 2 reçoit une information de localisation envoyée par la serrure communicante 3, l'information de localisation renseignant une certaine position de la serrure communicante 3 sur le globe terrestre. Dans une seconde étape S302, le serveur 2 détermine et envoie un paramètre de périodicité modifié à la serrure communicante 3. Dans une troisième étape S303, la serrure communicante 3 reçoit et transmet le paramètre de périodicité modifié au capteur de mesure 4. Dès réception du paramètre de périodicité modifié par les moyens de communication 15 du capteur de mesure 4, le processeur 14 commande l'enregistrement du paramètre de périodicité modifié dans la mémoire 21. Ensuite, le processeur 14 commande les moyens de mesure m pour que la mesure des paramètres physiques soit effectuée à des intervalles de temps déterminés en fonction du paramètre de périodicité modifié.

En mettant en oeuvre le procédé de suivi tel que décrit ci-dessus, le système pour le suivi de marchandises selon l'invention est à même de varier la périodicité selon laquelle sont contrôlées les conditions de transport et ce en fonction du lieu où se trouvent les marchandises. Ainsi, les conditions de transport peuvent être contrôlées de manière plus assidue en certains lieux du trajet de transport et de manière moins approfondie en d'autres lieux. Ainsi, le procédé de suivi selon l'invention permet par exemple de tenir compte de la dangerosité de certains lieux du trajet de transport et de modifier en conséquence la manière avec laquelle le suivi des conditions de transport est effectué.

Selon un mode d'exécution alternatif, le procédé comprend une quatrième étape S304 durant laquelle le serveur 2 reçoit une nouvelle information de localisation de la serrure communicante 3. Dans une cinquième étape S305, le serveur 2 transmet une information d'arrêt à la serrure communicante 3 qui, dans une sixième étape S306, transmet l'information d'arrêt au capteur de mesure 4. Dans une septième étape S307, le processeur 14 analyse l'information d'arrêt et, en fonction de celle-ci, commande l'extinction immédiate ou ultérieure des moyens de mesure m.

Ces étapes du procédé de suivi selon l'invention confèrent au système pour le suivi de marchandises selon l'invention la capacité de commander à distance la désactivation du capteur de mesure 4 en fonction du lieu sur le globe terrestre où se trouvent les marchandises. Ainsi, il est possible de ne pas consommer la batterie du capteur de mesure lorsque cela n'est pas nécessaire, par exemple lorsque la marchandise arrive à destination ou lorsqu'elle est entreposée dans un environnement où les conditions environnementales (température, pression, humidité, etc.) sont connues si bien qu'il devient inutile de les observer.

## Revendications

1. Système pour le suivi de marchandises (1) comprenant au moins un serveur (2), **caractérisé en ce que** le système comprend au moins une serrure communicante (3), destinée à être apposée sur un container, et au moins un capteur de mesure (4), destiné à être apposé au contact desdites marchandises,
- la serrure communicante (3) comprenant des moyens de contrôle (8) et des premiers moyens de communication (9), les premiers moyens de communication (9) étant configurés pour émettre et recevoir des signaux radiofréquences à destination et en provenance du serveur et du capteur de mesure (4),
- le capteur de mesure comprenant un processeur (14), des moyens de mesure (m) pour la mesure d'au moins un paramètre physique, une mémoire (21) et des seconds moyens de communication (15) aptes à communiquer avec les premiers moyens de communication de manière bidirectionnelle, la mémoire (21) étant apte, sur instruction du processeur (14), à stocker durablement au moins une valeur d'un paramètre physique mesuré au moyen des moyens de mesure (m), les seconds moyens de communication (15) étant configurés pour émettre des signaux radiofréquences,
- les moyens de contrôle (8) et/ou le processeur (14) étant configurés pour déterminer si une valeur d'un paramètre physique mesuré au moyen des moyens de mesure (m) est en conformité avec un paramètre de consigne.

2. Système selon la revendication 1, **caractérisé en ce que** la serrure communicante (3) comprend une première (5) et une seconde (6) prise pour connecter les deux extrémités d'une fibre optique (7), les moyens de contrôle (8) étant aptes, quand la première extrémité de la fibre est connectée à la première prise (5) et la deuxième extrémité de la fibre est connectée à la seconde prise (6), à déterminer l'intégrité d'une fibre optique (7) et le statut, connectée ou déconnectée, de la première (5) et de la seconde (6) prise.

3. Système selon l'une des revendications précédentes, **caractérisé en ce que** les seconds moyens de communication (15) sont configurés pour la réception de signaux radiofréquences.

4. Système selon l'une des revendications précédentes, **caractérisé en ce que** les moyens de mesure (m) comprennent des moyens de mesure de la température ambiante (16).

5. Système selon l'une des revendications précédentes, **caractérisé en ce que** les moyens de mesure comprennent des moyens de mesure de l'humidité ambiante (17).

6. Système selon l'une des revendications précédentes, **caractérisé en ce que** les moyens de mesure comprennent des moyens de mesure de l'intensité lumineuse (18).

7. Système selon l'une des revendications précédentes, **caractérisé en ce que** les moyens de mesure comprennent des moyens de mesure de la pression (19).

8. Système selon l'une des revendications précédentes, **caractérisé en ce que** les moyens de mesure comprennent des moyens de détection de la présence d'un gaz (20).

9. Système selon l'une des revendications précédentes, **caractérisé en ce que** la serrure communicante (3) comprend un module de géolocalisation (10).

10. Système selon l'une des revendications précédentes, **caractérisé en ce que** la serrure communicante (3) comprend un module de détection de mouvement (11).

11. Système selon l'une des revendications précédentes, **caractérisé en ce que** la serrure communicante (3) comprend des moyens d'alimentation (12) confinés dans un caisson (13) en un matériau limitant les risques de propagation d'un incendie résultant d'une défaillance des moyens d'alimentation à l'ensemble de la serrure communicante (3).

12. Système selon la revendication précédente, **caractérisé en ce que** le matériau est l'aluminium ou un mélange de polycarbonate et d'acrylonitrile butadiène styrène.

13. Procédé de suivi de marchandises mis en oeuvre par un système de suivi de marchandises selon l'une des revendications précédentes, **caractérisé en ce que** le procédé comprend les étapes suivantes :
• réception par le serveur (2) d'une première information de localisation envoyée par la serrure communicante (3) ;
• transmission par le serveur (2) d'une instruction de travail à destination de la serrure communicante (3), l'instruction de travail indiquant une périodicité de mesure ;
• transmission par la serrure communicante (3) de l'instruction de travail à destination du capteur de mesure (4); et
• modification par le processeur (14) du capteur de mesure (4) de la périodicité des mesures effectuées au moyen des moyens de mesure (m) du capteur de mesure (4) sur la base de l'indication de travail.

14. Procédé de suivi selon la revendication précédente, **caractérisé en ce qu'**il comprend les étapes suivantes :
• réception par le serveur (2) d'une seconde information de localisation envoyée par la serrure communicante (3);
• transmission par le serveur (2) d'une instruction d'arrêt à destination de la serrure communicante (3);
• transmission par la serrure communicante (3) de l'instruction d'arrêt à destination du capteur de mesure (4); et
• extinction des moyens de mesure (m) du capteur de mesure (3).

## Patentansprüche

1. System zur Nachverfolgung von Waren (1), umfassend mindestens einen Server (2), **dadurch gekennzeichnet, dass** das System mindestens ein Verbindungsschloss (3) umfasst, das ausgelegt ist, um auf einen Behälter aufgebracht zu werden, und mindestens einen Messsensor (4), der ausgelegt ist, um in Kontakt mit den Waren aufgebracht zu werden,
- wobei das Verbindungsschloss (3) Steuermittel (8) und erste Kommunikationsmittel (9) umfasst, wobei die ersten Kommunikationsmittel (9) konfiguriert sind, um Funkfrequenzsignale für den und vom Server und Messsensor (4) zu emittieren und zu empfangen,
- wobei der Messsensor einen Prozessor (14), Messmittel (m) zur Messung von mindestens einem physischen Parameter, einen Speicher (21) und zweite Kommunikationsmittel (15) umfasst, die ausgelegt sind, um mit den ersten Kommunikationsmitteln auf bidirektionale Weise zu kommunizieren, wobei der Speicher (21) ausgelegt ist, um auf Anweisung des Prozessors (14) dauerhaft mindestens einen Wert eines physischen Parameters zu speichern, der mit Hilfe der Messmittel (m) gemessen wurde, wobei die zweiten Kommunikationsmittel (15) konfiguriert sind, um Funkfrequenzsignale zu emittieren,
- wobei die Steuermittel (8) und/oder der Prozessor (14) konfiguriert sind, um zu bestimmen, ob ein Wert eines physischen Parameters, der mit Hilfe der Messmittel (m) gemessen wurde, mit einem Einstellparameter übereinstimmt.

2. System nach Anspruch 1, **dadurch gekennzeichnet, dass** das Verbindungsschloss (3) eine erste (5) und eine zweite (6) Steckdose umfasst, um die zwei Enden einer optischen Faser (7) zu verbinden, wobei die Steuermittel (8) ausgelegt sind, wenn das erste Ende der Faser mit der ersten Steckdose (5) verbunden ist und das zweite Ende der Faser mit der zweiten Steckdose (6) verbunden ist, die Integrität einer optischen Faser (7) und den Zustand, verbunden oder nicht verbunden, der ersten (5) und der zweiten (6) Steckdose zu bestimmen.

3. System nach einem der vorhergehenden Ansprüche, **dadurch gekennzeichnet, dass** die zweiten Kommunikationsmittel (15) konfiguriert sind, um Funkfrequenzsignale aufzunehmen.

4. System nach einem der vorhergehenden Ansprüche, **dadurch gekennzeichnet, dass** die Messmittel (m) Mittel zum Messen der Umgebungstemperatur (16) umfassen.

5. System nach einem der vorhergehenden Ansprüche, **dadurch gekennzeichnet, dass** die Messmittel Mittel zum Messen der Umgebungsfeuchtigkeit (17) umfassen.

6. System nach einem der vorhergehenden Ansprüche, **dadurch gekennzeichnet, dass** die Messmittel Mittel zum Messen der Lichtintensität (18) umfassen.

7. System nach einem der vorhergehenden Ansprüche, **dadurch gekennzeichnet, dass** die Messmittel Mittel zum Messen des Drucks (19) umfassen.

8. System nach einem der vorhergehenden Ansprüche, **dadurch gekennzeichnet, dass** die Messmittel Mittel zum Nachweis des Vorhandenseins eines Gases (20) umfassen.

9. System nach einem der vorhergehenden Ansprüche, **dadurch gekennzeichnet, dass** das Verbindungsschloss (3) ein Modul zur Geolokalisierung (10) umfasst.

10. System nach einem der vorhergehenden Ansprüche, **dadurch gekennzeichnet, dass** das Verbindungsschloss (3) ein Modul zum Nachweis von Bewegung (11) umfasst.

11. System nach einem der vorhergehenden Ansprüche, **dadurch gekennzeichnet, dass** das Verbindungsschloss (3) Mittel zur Versorgung (12) umfasst, die in einen Kasten (13) aus einem Material eingeschlossen sind, der die Risiken der Ausbreitung eines Brands, der sich aus dem Defekt der Mittel zur Versorgung ergibt, auf die Gesamtheit des Verbindungsschlosses (3) begrenzt.

12. System nach dem vorhergehenden Anspruch, **dadurch gekennzeichnet, dass** das Material Aluminium oder eine Mischung aus Polycarbonat und AcrylnitrilButadien-Styrol ist.

13. Verfahren zur Nachverfolgung von Waren, durchgeführt durch ein System zur Nachverfolgung von Waren nach einem der vorhergehenden Ansprüche, **dadurch gekennzeichnet, dass** das Verfahren die folgenden Schritte umfasst:
- Empfangen, durch den Server (2), einer ersten Lokalisierungsinformation, geschickt vom Verbindungsschloss (3);
- Übertragen, durch den Server (2), einer Arbeitsanweisung für das Verbindungsschloss (3), wobei die Arbeitsanweisung ein Messhäufigkeit anzeigt;
- Übertragen, durch das Verbindungsschloss (3), der Arbeitsanweisung für den Messsensor (4); und
- Modifizierungen, durch den Prozessor (14), des Messsensors (4), der Messhäufigkeit, die mit Hilfe der Messmittel (m) des Messsensors (4) auf der Grundlage der Arbeitsanweisung durchgeführt werden.

14. Verfahren zur Nachverfolgung nach dem vorhergehenden Anspruch, **dadurch gekennzeichnet, dass** es die folgenden Schritte umfasst:
- Empfangen, durch den Server (2), einer zweiten Lokalisierungsinformation, geschickt vom Verbindungsschloss (3);
- Übertragen, durch den Server (2), einer Stoppanweisung für das Verbindungsschloss (3);
- Übertragung, durch das Verbindungsschloss (3), einer Stoppanweisung für den Messsensor (4); und
- Löschen der Messmittel (m) des Messsensors (3).

## Claims

1. A system for monitoring goods (1) comprising at least one server (2), **characterized in that** the system comprises at least one communicating lock (3) intended to be affixed on a container and at least one measuring sensor (4) intended to be affixed in contact with the goods,
- the communicating lock (3) comprising inspection means (8) and first communication means (9), the first communication means (9) being configured to send and receive radiofrequency signals to and from the server (2) and the measuring sensor,
- the measuring sensor comprising a processor (14), measuring means (m) for measuring at least one physical parameter, a memory (21) and second communication means (15) able to communicate with the first and second communication means in a bidirectional manner, the memory (21) being able, upon instructions from the processor (14), to lastingly store at least one value of a physical parameter measured using the measuring means (m), the second communication means (15) being configured to send radiofrequency signals,
- the inspection means (8) and/or the processor (14) being configured to determine whether a value of a physical parameter measured using the measuring means (m) is compliant with a setpoint parameter.

2. The system according to claim 1, **characterized in that** the communicating lock (3) comprises a first (5) and second (6) jack for connecting the two ends of an optical fiber (7), the inspection means (8) being able, when the first end of the fiber is connected to the first jack (5) and the second end of the fiber is connected to the second jack (6), to determine the integrity of an optical fiber (7) and the connected or disconnected status of the first (5) and second (6) jacks.

3. The system according to one of the preceding claims, **characterized in that** the second communication means (15) are configured to receive radiofrequency signals.

4. The system according to one of the preceding claims, **characterized in that** the measuring means (m) comprise means for measuring the ambient temperature (16).

5. The system according to one of the preceding claims, **characterized in that** the measuring means comprise means for measuring the ambient humidity (17).

6. The system according to one of the preceding claims, **characterized in that** the measuring means comprise means for measuring the light intensity (18).

7. The system according to one of the preceding claims, **characterized in that** the measuring means comprise means for measuring the pressure (19).

8. The system according to one of the preceding claims, **characterized in that** the measuring means comprise means for detecting the presence of a gas (20).

9. The system according to one of the preceding claims, **characterized in that** the communicating lock (3) comprises a geolocation module (10)

10. The system according to one of the preceding claims, **characterized in that** the communicating lock (3) comprises a movement detection module (11).

11. The system according to one of the preceding claims, **characterized in that** the communicating lock (3) comprises power supply means (12) confined in a box (13) made from a material limiting the propagation risks of a fire resulting from a failure of the power supply means to the entire communicating lock (3).

12. The system according to the preceding claim, **characterized in that** the material is aluminum or a mixture of polycarbonate and acrylonitrile butadiene styrene.

13. A method for monitoring goods implemented by a system for monitoring goods according to one of the preceding claims, **characterized in that** the method comprises the following steps:
• reception by the server (2) of the first piece of location information sent by the communicating lock (3);
• sending by the server (2) of a work instruction intended for the communicating lock (3), the work instruction indicating a measurement frequency;
• sending by the communicating lock (3) of the work instruction to the measuring sensor (4); and
• modification by the processor (14) of the measuring sensor (4) of the frequency of the measurements done using the measuring means (m) of the measuring sensor (4) based on the work indication.

14. The monitoring method according to the preceding claim, **characterized in that** it comprises the following steps:
• reception by the server (2) of a second piece of location information sent by the communicating lock (3);
• sending by the server (2) of a stop instruction intended for the communicating lock (3);
• sending by the communicating lock (3) of the stop instruction intended for the measuring sensor (4); and
• extinguishing of the measuring means (m) of the measuring sensor (3).
